# EUROPÄISCHE PATENTSCHRIFT

(11) **EP 3 427 126 B1**
(45) Veröffentlichungstag und Bekanntmachung des Hinweises auf die Patenterteilung: **09.10.2019**
(21) Anmeldenummer: 17707772.4
(22) Anmeldetag: 09.02.2017
(51) Int. Cl.: G06F 3/01, G06F 3/0482, G06Q 30/06, G06F 3/0484, G02B 27/01

(54) **VERFAHREN ZUM BETREIBEN EINES VIRTUAL-REALITY-SYSTEMS UND VIRTUAL-REALITY-SYSTEM**
METHOD FOR OPERATING A VIRTUAL REALITY SYSTEM, AND VIRTUAL REALITY SYSTEM
PROCÉDÉ DE FONCTIONNEMENT D'UN SYSTÈME DE RÉALITÉ VIRTUELLE ET SYSTÈME DE RÉALITÉ VIRTUELLE

(30) Priorität: 12.03.2016 DE 102016003074
(43) Veröffentlichungstag der Anmeldung: 16.01.2019
(73) Patentinhaber: Audi AG, 85045 Ingolstadt (DE)
(72) Erfinder: KÜHNE, Marcus, 92339 Beilngries (DE)
(86) Internationale Anmeldenummer: PCT/EP2017/052836
(87) Internationale Veröffentlichungsnummer: WO 2017/157589

(56) Entgegenhaltungen:
- DE-A1-102014 009 304
- DE-A1-102014 009 697

## Beschreibung

Die Erfindung betrifft ein Verfahren zum Betreiben eines Virtual-Reality-Systems und ein Virtual-Reality-System.

Mittels eines Virtual-Reality-Systems kann eine virtuelle Realität dargestellt werden, wobei als virtuelle Realität üblicherweise die Darstellung und gleichzeitige Wahrnehmung der Wirklichkeit in ihren physikalischen Eigenschaften in einer in Echtzeit computergenerierten, interaktiven virtuellen Umgebung bezeichnet wird.

Virtual-Reality-Systeme können eine Virtual-Reality-Brille zum Anzeigen einer virtuellen Umgebung aufweisen. Bei einer Virtual-Reality-Brille handelt es sich um eine bestimmte Form eines sogenannten Head-Mounted-Displays, bei welchem es sich um ein auf dem Kopf getragenes visuelles Ausgabegerät handelt. Es präsentiert Bilder auf einem augennahen Bildschirm oder projiziert sie direkt auf die Netzhaut. Eine Virtual-Reality-Brille hat dabei zusätzlich noch Sensoren zur Bewegungserfassung des Kopfes. Damit kann die Anzeige einer berechneten Grafik an die Bewegungen eines Träger der Virtual-Reality-Brille angepasst werden. Durch die körperliche Nähe wirken die angezeigten Bildflächen von Head-Mounted-Displays erheblich größer als die freistehender Bildschirme und decken im Extremfall sogar das gesamte Sichtfeld des Benutzers ab. Da jeweilige Displays von Virtual-Reality-Brillen durch die Kopfhaltung allen Kopfbewegungen eines Trägers folgen, bekommt er das Gefühl, sich direkt in einer von einem Computer erzeugten Bildlandschaft zu bewegen.

Insbesondere moderne Kraftfahrzeuge weisen oft eine Vielzahl von verschiedenen Ausstattungsoptionen auf, wodurch eine kundenindividuelle Konfiguration sich sehr aufwendig und schwierig gestalten kann.

Es ist die Aufgabe der vorliegenden Erfindung, ein Verfahren zum Betreiben eines Virtual-Reality-Systems sowie ein Virtual-Reality-System bereitzustellen, mittels welchem ein Produkt auf besonders einfache Weise virtuell konfiguriert werden kann.

Diese Aufgabe wird durch ein Verfahren zum Betreiben eines Virtual-Reality-Systems sowie durch ein Virtual-Reality-System mit den Merkmalen der unabhängigen Patentansprüche gelöst. Vorteilhafte Ausgestaltungen mit zweckmäßigen und nicht trivialen Weiterbildungen der Erfindung sind in den abhängigen Ansprüchen angegeben.

Bei dem erfindungsgemäßen Verfahren zum Betreiben eines Virtual-Reality-Systems wird ein in einer virtuellen Umgebung angeordnetes virtuelles Objekt mittels einer von einer ersten Person aufgesetzten Virtual-Reality-Brille angezeigt. Ein mehrere Ausstattungsoptionen umfassendes Konfigurationsmenü für eine vorgegebene Funktionsgruppe des angezeigten virtuellen Objekts wird mittels der Virtual-Reality-Brille eingeblendet, sobald eine zweite Person einen Konfigurationsmodus einer Steuereinrichtung aktiviert. Einer der eingeblendeten Ausstattungsoptionen wird entsprechend einer durch die zweite Person an der Steuereinrichtung getätigten Auswahlhandlung ausgewählt und die Darstellung des virtuellen Objekts entsprechend der getätigten Auswahl verändert. Sobald das Konfigurationsmenü für die Funktionsgruppe eingeblendet wird, wird die Funktionsgruppe oder zumindest ein zur Funktionsgruppe gehörendes Bauteil des virtuellen Objekts optisch hervorgehoben.

Mittels des erfindungsgemäßen Verfahrens ist es also möglich, dass eine Person die Virtual-Reality-Brille während eines Konfigurationsvorgangs des angezeigten virtuellen Objekts fortlaufend aufgesetzt lassen kann. Die zweite Person kann wann immer notwendig für jeweilige Funktionsgruppen des angezeigten virtuellen Objekts ein passgenaues Konfigurationsmenü mittels der Virtual-Reality-Brille einblenden lassen. Die erste Person, welche die Virtual-Reality-Brille aufgesetzt hat, kann dann erkennen, welche Ausstattungsoptionen für die betreffende Funktionsgruppe zur Verfügung stehen. Vorzugsweise wird das mittels der Virtual-Reality-Brille angezeigte Konfigurationsmenü ebenfalls mittels einer mit der Steuereinrichtung verbundenen Anzeigeeinrichtung angezeigt, und zwar derart, dass die zweite Person das Konfigurationsmenü ebenfalls einsehen kann. Der Träger der Virtual-Reality-Brille und die weitere Person können sich dann beispielsweise darüber unterhalten, welche Ausstattungsoption für die betreffende Funktionsgruppe ausgewählt werden soll. Sobald die zweite und die erste Person sich geeinigt haben, kann die zweite Person an der Steuereinrichtung eine entsprechende Auswahl vornehmen, in Folge dessen die betreffende Ausstattungsoption ausgewählt wird. Anschließend wird die Darstellung des virtuellen Objekts entsprechend der getätigten Auswahl angepasst.

Mittels des erfindungsgemäßen Verfahrens wird also eine gezielte Einblendung eines einen Konfigurationsvorgang unterstützenden Auswahlfensters in Form des Konfigurationsmenüs ermöglicht. Das Konfigurationsmenü wird dabei mittels der Virtual-Reality-Brille innerhalb der bereits angezeigten virtuellen Umgebung eingeblendet. Bei der Steuereinrichtung kann es sich beispielsweise um einen Tablet Computer oder um einen herkömmlichen Computer handeln, welcher während des Konfigurationsprozesses von der zweiten Person bedient wird. Die zweite Person steuert also bei dem erfindungsgemäßen Verfahren das Einblenden des Konfigurationsmenüs und die Auswahl der betreffenden Ausstattungsoptionen. Das Verfahren ist beispielsweise in einem Verkaufsgespräch einsetzbar, bei welchem die erste Person die Virtual-Reality-Brille aufgesetzt hat, wobei es sich bei der zweiten Person zum Beispiel um einen Verkäufer handeln kann. Der Verkäufer kann in einem geeigneten Moment das Konfigurationsmenü mittels der Virtual-Reality-Brille innerhalb der bereits angezeigten virtuellen Umgebung einblenden lassen, so dass der Kunde, also die erste Person, das Konfigurationsmenü sehen kann, so dass der Kunde bei der Auswahl von einer der zur Verfügung stehenden Ausstattungsoptionen durch Einblenden des Konfigurationsmenüs unterstützt wird. Ein potenzieller Käufer, also die erste Person, welche die Virtual-Reality-Brille aufgesetzt hat, und ein Verkäufer, also die zweite Person, können so auf besonders einfache und bequeme Weise das angezeigte virtuelle Objekt, bei welchem es sich beispielsweise um ein virtuelles Kraftfahrzeug handeln kann, auf besonders einfache Weise gemeinsam konfigurieren.

Eine vorteilhafte Ausführungsform der Erfindung sieht vor, dass die Funktionsgruppe, für welche das Konfigurationsmenü eingeblendet wird, entsprechend einer durch die zweite Person an der Steuereinrichtung getätigten Eingabe vorgegeben wird. Handelt es sich bei dem virtuellen Objekt beispielsweise um ein virtuelles Kraftfahrzeug, so kann die zweite Person an der Steuereinrichtung bestimmen, für welche Funktionsgruppe des virtuellen Kraftfahrzeugs gerade ein entsprechendes Konfigurationsmenü mit jeweiligen Ausstattungsoptionen eingeblendet werden soll. Vorzugsweise sieht die zweite Person, aus welcher virtuellen Perspektive die erste Person durch die Virtual-Reality-Brille gerade auf das virtuelle Objekt blickt. Entsprechend der virtuellen Perspektive der ersten Person kann die zweite Person durch eine entsprechende Eingabe an der Steuereinrichtung diejenige Funktionsgruppe des virtuellen Kraftfahrzeugs, beispielsweise die Felgen, die Karosserie oder dergleichen, auswählen, für welche das entsprechende Konfigurationsmenü innerhalb der bereits angezeigten virtuellen Umgebung eingeblendet werden soll. So kann die zweite Person die erste Person Schritt für Schritt durch die Konfiguration des virtuellen Objekts leiten.

Die Erfindung sieht vor, dass die Funktionsgruppe oder zumindest ein zur Funktionsgruppe gehörendes Bauteil des Objekts optisch hervorgehoben wird, sobald das Konfigurationsmenü für die Funktionsgruppe eingeblendet wird. Die erste Person kann dadurch auf einfache Weise direkt erkennen, für welche Funktionsgruppe des virtuellen Objekts gerade das Konfigurationsmenü eingeblendet worden ist. Dies erleichtert den Konfigurationsvorgang erheblich.

Gemäß einer weiteren vorteilhaften Ausführungsform der Erfindung ist es vorgesehen, dass innerhalb des eingeblendeten Konfigurationsmenüs ein Auswahlsymbol angezeigt wird, mittels welchem die ausgewählte Ausstattungsoption optisch markiert wird. Beispielsweise kann das Auswahlsymbol in Form eines Rechtecks eingeblendet werden, so dass der Träger der Virtual-Reality-Brille, also die erste Person, auf einfache Weise direkt erkennen kann, welche der zur Verfügung stehenden Ausstattungsoptionen gerade von der zweiten Person ausgewählt worden sind. Dies erleichtert erheblich die Kommunikation zwischen der ersten und der zweiten Person während der Konfiguration des virtuellen Objekts.

In weiterer vorteilhafter Ausgestaltung der Erfindung ist es vorgesehen, dass die Darstellung des virtuellen Objekts erst verändert wird, wenn die Auswahl der Ausstattungsoption von der zweiten Person an der Steuereinrichtung bestätigt worden ist. Vorzugsweise wird also die Darstellung des virtuellen Objekts nicht direkt mit der Auswahl von einer der eingeblendeten Ausstattungsoptionen angepasst, stattdessen ist es vorgesehen, dass die Darstellung des virtuellen Objekts erst verändert wird, wenn die Auswahl der Ausstattungsoption von der zweiten Person zusätzlich an der Steuereinrichtung bestätigt worden ist. Die erste und die zweite Person können sich also in Ruhe zunächst darüber unterhalten, welche der angezeigten Auswahloptionen überhaupt ausgewählt werden soll. Außerdem kann es auch vorkommen, dass verschiedene Ausstattungsoptionen zunächst ausgewählt und wieder abgewählt werden. Dadurch, dass die finale Auswahl der betreffenden Ausstattungsoption erst noch von der zweiten Person bestätigt werden muss, bevor die Darstellung des angezeigten virtuellen Objekts entsprechend angepasst wird, wird der Träger der Virtual-Reality-Brille, also die erste Person, während des Auswahlprozesses nicht durch ständige Änderung der Darstellung des virtuellen Objekts abgelenkt.

Eine weitere vorteilhafte Ausführungsform der Erfindung sieht vor, dass für die eingeblendeten Ausstattungsoptionen jeweilige Informationsfenster angezeigt werden, insbesondere wenn die zweite Person einen entsprechenden Steuerbefehl an der Steuereinrichtung eingibt. Ferner kann es auch vorgesehen sein, dass für die gerade ausgewählte Ausstattungsoption ein jeweiliges Informationsfenster mit Zusatzinformationen für die betreffende Ausstattungsoption angezeigt wird. Die erste Person kann dadurch für die Konfiguration des virtuellen Objekts relevante Informationen im Hinblick auf die gerade ausgewählte Ausstattungsoption erhalten. Dies erleichtert den Konfigurationsvorgang des virtuellen Objekts.

Gemäß einer weiteren vorteilhaften Ausführungsform der Erfindung ist es vorgesehen, dass das Konfigurationsmenü derart eingeblendet wird, dass ein virtueller Abstand innerhalb der virtuellen Umgebung zwischen dem Konfigurationsmenü und einer virtuellen Beobachtungsposition der ersten Person umso kleiner gewählt wird, je geringer der Abstand zwischen der virtuellen Beobachtungsposition und der Funktionsgruppe ist, für welche das Konfigurationsmenü angezeigt wird. Sitzt die erste Person beispielsweise in einem virtuellen Kraftfahrzeug, wird das Konfigurationsmenü virtuell etwas näher an der ersten Person eingeblendet als wenn diese sich beispielsweise außerhalb des virtuellen Kraftfahrzeugs befinden sollte und somit von außen auf das virtuelle Kraftfahrzeug blickt. Vorzugsweise wird der virtuelle Abstand jedoch auf ein vorgegebenes Maß begrenzt. Sollte sich die erste Person also virtuell sehr weit von dem angezeigten virtuellen Objekt entfernen, so wird das Konfigurationsmenü jedoch höchstens virtuell so weit weg von der ersten Person angezeigt, wie das besagte vorgegebene Maß eingestellt ist. Insbesondere wird das Konfigurationsmenü derart eingeblendet, dass die Ausstattungsoptionen von der ersten Person immer noch gut ablesbar und einsehbar sind.

Eine weitere vorteilhafte Ausführungsform der Erfindung sieht vor, dass derjenige Teil der virtuellen Umgebung und/oder des virtuellen Objekts ausgeblendet wird, welcher vom eingeblendeten Konfigurationsmenü überdeckt wird. Dadurch kann verhindert werden, dass ein visueller Konflikt entsteht, beispielsweise weil das eingeblendete Konfigurationsmenü sich teilweise in dem angezeigten virtuellen Objekt befindet.

Das erfindungsgemäße Virtual-Reality-System umfasst eine Virtual-Reality-Brille und eine Steuereinrichtung, welche dazu ausgelegt ist, die Virtual-Reality-Brille zum Durchführen des erfindungsgemäßen Verfahrens oder einer vorteilhaften Ausführungsform des erfindungsgemäßen Verfahrens anzusteuern. Vorteilhafte Ausgestaltungen des erfindungsgemäßen Verfahrens sind dabei als vorteilhafte Ausgestaltungen des Virtual-Reality-Systems anzusehen, wobei das Virtual-Reality-System insbesondere Mittel zur Durchführung der Verfahrensschritte aufweist.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig.1: eine schematische Darstellung eines Virtual-Reality-Systems, welches eine Virtual-Reality-Brille und eine Steuereinrichtung zum Ansteuern der Virtual-Reality-Brille umfasst;
- Fig. 2: eine schematische Darstellung, in welcher eine erste Person gezeigt ist, welche die Virtual-Reality-Brille aufgesetzt hat, wobei eine zweite an einem Tisch sitzende Person dargestellt ist, welche die Steuereinrichtung des Virtual-Reality-Systems bedient; und in
- Fig. 3: ein in einer virtuellen Umgebung angeordnetes virtuelles Kraftfahrzeug, welches mittels der Virtual-Reality-Brille angezeigt wird.

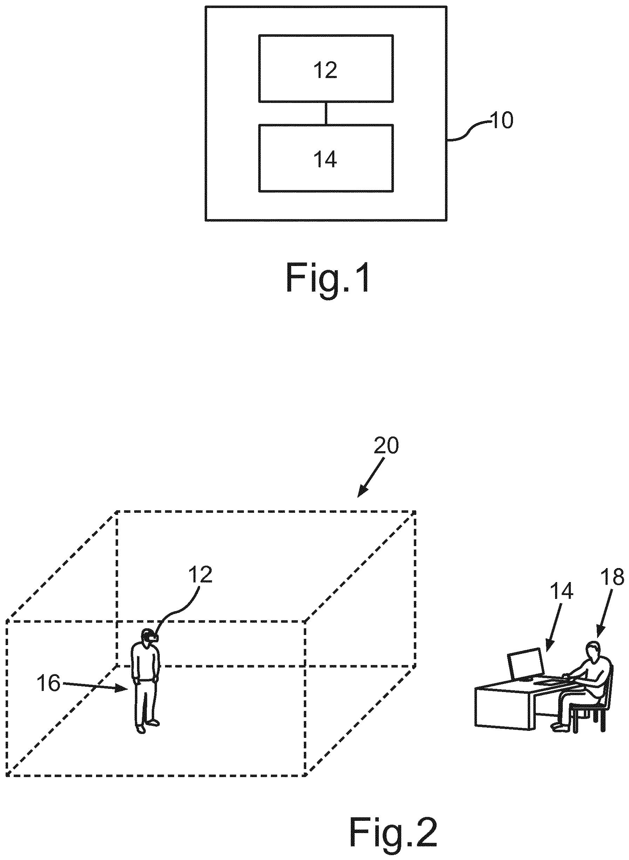

Ein Virtual-Reality-System 10 mit einer Virtual-Reality-Brille 12 und einer Steuereinrichtung 14 zum Ansteuern der Virtual-Reality-Brille 12 ist in einer schematischen Darstellung in Fig. 1 gezeigt. Das Virtual-Reality-System 10 dient dazu, ein virtuelles Objekt, insbesondere ein virtuelles Kraftfahrzeug, zu konfigurieren.

In Fig. 2 sind eine erste Person 16 und eine zweite Person 18 schematisch dargestellt, wobei die erste Person 16 die Virtual-Reality-Brille 12 aufgesetzt hat und sich in einem Erfassungsraum 20 befindet. Die zweite Person 18 bedient die Steuereinrichtung 14, bei welcher es sich im vorliegend gezeigten Beispiel um einen Laptop handelt. Alternativ kann es sich beispielsweise bei der Steuereinrichtung 14 auch um einen Tablet Computer, einen herkömmlichen PC oder dergleichen handeln. Das Virtual-Reality-System 10 kann eine hier nicht dargestellte Erfassungseinrichtung aufweisen, mittels welcher die Position der Virtual-Reality-Brille 12 fortlaufend erfasst werden kann, zumindest solange sich die Person 16 innerhalb des Erfassungsraums 20 aufhält.

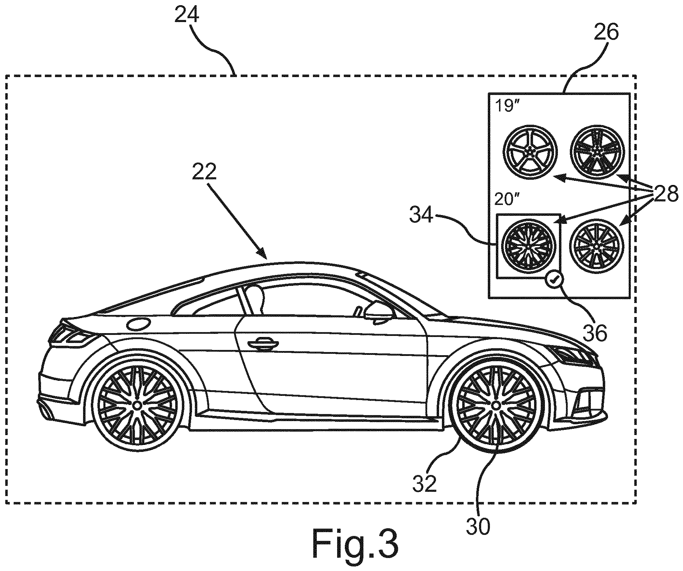

In Fig. 3 ist ein virtuelles Kraftfahrzeug 22 gezeigt, welches innerhalb einer virtuellen Umgebung 24, wie beispielsweise einem virtuellen Showroom, angeordnet ist. Das virtuelle Kraftfahrzeug, welches innerhalb der virtuellen Umgebung 24 angeordnet ist, wird mittels der Virtual-Reality-Brille 12 angezeigt, welche von der ersten Person 16 aufgesetzt ist. Die zweite Person 18, die an dem Tisch sitzt, unterstützt die erste Person 16 bei der Konfiguration des virtuellen Kraftfahrzeugs 22. Im vorliegend gezeigten Fall soll die erste Person 16, welche die Virtual-Reality-Brille 12 aufgesetzt hat, sich gerade für eine bestimmte Felgenvariante entscheiden.

Die zweite Person 18 aktiviert dafür an der Steuereinrichtung 14 einen Konfigurationsmodus. Zuvor wählt die zweite Person 18 beispielsweise noch aus, dass eine Felgenauswahl getroffen werden soll. Sobald die zweite Person 18 an der Steuereinrichtung 14 den Konfigurationsmodus aktiviert hat, wird innerhalb der mittels der Virtual-Reality-Brille 12 angezeigten virtuellen Umgebung 24 ein Konfigurationsmenü 26 eingeblendet. Wie zu erkennen, umfasst das eingeblendete Konfigurationsmenü 26 verschiedene Felgen 28, welche jeweilige Ausstattungsoptionen für die Räder 30 des angezeigten virtuellen Kraftfahrzeugs 22 darstellen. Wie zu erkennen, ist im vorliegend gezeigten Fall das rechte Vorderrad 30 mittels einer Markierung 32 optisch hervorgehoben. Die erste Person 16, welche die Virtual-Reality-Brille 12 aufgesetzt hat, kann so auf einfache Weise erkennen, dass das eingeblendete Konfigurationsmenü 26 zur Funktionsgruppe Reifen des virtuellen Kraftfahrzeugs 22 gehört.

Zudem wird - vorzugsweise sobald das Konfigurationsmenü 26 eingeblendet wird - noch ein Auswahlsymbol 34 innerhalb des eingeblendeten Konfigurationsmenüs 26 angezeigt. Die zweite Person 18 kann durch entsprechende Steuerungshandlungen an der Steuereinrichtung 14 das Auswahlsymbol 34 verschieben, so dass die unterschiedlichen zur Verfügung stehenden Ausstattungsoptionen in Form der angezeigten Felgen 28 optisch markiert werden können. Die erste Person 16, welche die Virtual-Reality-Brille 12 aufgesetzt hat, und die zweite Person 18, welche die eigentliche Konfigurationshandlung an dem virtuellen Kraftfahrzeug 22 vornimmt, können sich so auf einfache und unmissverständliche Weise miteinander darüber austauschen, welche der Ausstattungsoptionen, vorliegend also welche der Felgen 28, ausgewählt werden soll. Vorzugsweise wird mittels der Steuereinrichtung 14, im vorliegenden Fall also mittels des Laptops, dasselbe Konfigurationsmenü 26 angezeigt, wie es mittels der Virtual-Reality-Brille 12 innerhalb der virtuellen Umgebung 24 eingeblendet wird.

Sobald sich die beiden Personen 16, 18 darauf verständigt haben, welche der Felgen 28 nun tatsächlich ausgewählt werden soll, bestätigt die zweite Person 18 die Auswahl, in Folge dessen vorzugsweise ein Bestätigungssymbol 36 an dem Auswahlsymbol angezeigt wird. Sobald die Auswahl von der zweiten Person 18 bestätigt worden ist, wird die Darstellung des virtuellen Kraftfahrzeugs 22 entsprechend der getätigten und bestätigten Auswahl angepasst.

Insbesondere kann die zweite Person 18 durch eine entsprechende Eingabe an der Steuereinrichtung 14 bewirken, dass ein hier nicht dargestelltes Informationsfenster eingeblendet wird. Beispielsweise können für die unterschiedlichen Felgen 28 bei Bedarf noch jeweilige Informationsfenster eingeblendet werden, so dass die erste Person 16 durch die Virtual-Reality-Brille 12 neben dem eingeblendeten Konfigurationsmenü 26 noch Informationen im Hinblick auf die verschiedenen Felgen 28 erhalten kann. Dies erleichtert die Verständigung zwischen den beiden Personen 16, 18 während des Konfigurationsvorgangs des virtuellen Kraftfahrzeugs 22.

Das Konfigurationsmenü 26 wird dabei mittels der Virtual-Reality-Brille 12 immer so eingeblendet, dass die erste Person 16 die verschiedenen Ausstattungsoptionen 28 gut erkennen kann. Der virtuelle Abstand zwischen der virtuellen Beobachtungsposition der ersten Person 16 und dem eingeblendeten Konfigurationsmenü 26 wird dabei vorzugsweise dynamisch angepasst. Sitzt die erste Person 16 beispielsweise innerhalb des angezeigten virtuellen Kraftfahrzeugs 22, so wird das Konfigurationsmenü 26 virtuell näher mittels der Virtual-Reality-Brille 12 angezeigt als wenn die erste Person 16 durch die Virtual-Reality-Brille 12 von außen auf das virtuelle Kraftfahrzeug 22 blicken sollte.

Darüber hinaus kann es vorgesehen sein, dass derjenige Teil der virtuellen Umgebung 24 und/oder des virtuellen Kraftfahrzeugs 22 ausgeblendet wird, welcher vom eingeblendeten Konfigurationsmenü 26 überdeckt wird. Dies dient insbesondere dazu, einen visuellen Konflikt zu vermeiden, beispielsweise wenn das als Auswahlfenster dienende Konfigurationsmenü 26 quasi teilweise in dem angezeigten virtuellen Kraftfahrzeug 22 stehen sollte.

Mittels des erläuterten Virtual-Reality-Systems 10 wird also eine besonders einfache und bequeme Möglichkeit bereitgestellt, ein virtuelles Produkt, beispielsweise in Form des virtuellen Kraftfahrzeugs 22, zu konfigurieren.

## Patentansprüche

1. Verfahren zum Betreiben eines Virtual-Reality-Systems (10), mit den Schritten:
- Anzeigen eines in einer virtuellen Umgebung (24) angeordneten virtuellen Objekts (22) mittels einer von einer ersten Person (16) aufgesetzten Virtual-Reality-Brille (12);
- Einblenden eines mehrere Ausstattungsoptionen (28) umfassenden Konfigurationsmenüs (26) für eine vorgegebene Funktionsgruppe des angezeigten virtuellen Objekts (22) mittels der Virtual-Reality-Brille (12), sobald eine zweite Person (18) einen Konfigurationsmodus an einer Steuereinrichtung (14) aktiviert;
- Auswählen von einer der eingeblendeten Ausstattungsoptionen (28) entsprechend einer durch die zweite Person an der Steuereinrichtung (14) getätigten Auswahlhandlung und Verändern der Darstellung des virtuellen Objekts (22) entsprechend der getätigten Auswahl;
wobei das Verfahren **gekennzeichnet ist durch**
- Optisches Hervorheben der Funktionsgruppe oder zumindest eines zur Funktionsgruppe gehörenden Bauteils (30) des virtuellen Objekts (22), sobald das Konfigurationsmenü (26) für die Funktionsgruppe eingeblendet wird.

2. Verfahren nach Anspruch 1,
**dadurch gekennzeichnet, dass**
die Funktionsgruppe, für welche das Konfigurationsmenü (26) eingeblendet wird, entsprechend einer durch die zweite Person (18) an der Steuereinrichtung (14) getätigten Eingabe vorgegeben wird.

3. Verfahren nach einem der vorhergehenden Ansprüche,
**dadurch gekennzeichnet, dass**
innerhalb des eingeblendeten Konfigurationsmenüs (26) ein Auswahlsymbol (34) angezeigt wird, mittels welchem die ausgewählte Ausstattungsoption (28) optisch markiert wird.

4. Verfahren nach einem der vorhergehenden Ansprüche,
**dadurch gekennzeichnet, dass**
die Darstellung des virtuellen Objekts (22) erst verändert wird, wenn die Auswahl der Ausstattungsoption (28) von der zweiten Person (18) an der Steuereinrichtung (14) bestätigt worden ist.

5. Verfahren nach einem der vorhergehenden Ansprüche,
**dadurch gekennzeichnet, dass**
für die eingeblendeten Ausstattungsoptionen(28) jeweilige Informationsfenster angezeigt werden, insbesondere wenn die zweite Person (18) einen entsprechenden Steuerbefehl an der Steuereinrichtung (14) eingibt.

6. Verfahren nach einem der vorhergehenden Ansprüche,
**dadurch gekennzeichnet, dass**
das Konfigurationsmenü (26) derart eingeblendet wird, dass ein virtueller Abstand innerhalb der virtuellen Umgebung (24) zwischen dem Konfigurationsmenü (26) und einer virtuellen Beobachtungsposition der ersten Person (16) umso kleiner gewählt wird, je geringer der Abstand zwischen der virtuellen Beobachtungsposition und der Funktionsgruppe ist, für welche das Konfigurationsmenü (26) eingeblendet wird.

7. Verfahren nach Anspruch 6,
**dadurch gekennzeichnet, dass**
der virtuelle Abstand jedoch auf ein vorgegebenes Maß begrenzt wird.

8. Verfahren nach einem der vorhergehenden Ansprüche,
**dadurch gekennzeichnet, dass**
derjenige der Teil der virtuellen Umgebung (24) und/oder des virtuellen Objekts (22) ausgeblendet wird, welcher vom eingeblendeten Konfigurationsmenü (26) überdeckt wird.

9. Virtual-Reality-System (10), umfassend eine Virtual-Reality-Brille (12) und eine Steuereinrichtung (14), welche dazu ausgelegt ist, die Virtual-Reality-Brille (12) zum Durchführen eines Verfahrens nach einem der vorhergehenden Ansprüche anzusteuern.

## Claims

1. Method for operating a virtual reality system (10), having the steps:
- displaying, by means of a virtual reality pair of spectacles (12) worn by a first person (16), a virtual object (22) disposed in a first environment (24);
- expanding a configuration menu (26), comprising several configuration options (28), for a predetermined function group of the displayed virtual object (22) by means of the virtual reality pair of spectacles (12), as soon as a second person (18) activates a configuration mode at a control device (14);
- selecting from one of the expanded configuration options (28) corresponding to a selection action carried out by the second person at the control device (14) and altering the representation of the virtual object (22) corresponding to the carried-out selection;
wherein the method is **characterised by**
- optical highlighting of the function group or of at least one component (30), belonging to the function group, of the virtual object (22), as soon as the configuration menu (26) for the function group is expanded.

2. Method according to claim 1,
**characterised in that**
the function group for which the configuration menu (26) expanded is predetermined corresponding to an input carried out by the second person (18) at the control device (14).

3. Method according to any of the preceding claims
**characterised in that**
within the expanded configuration menu (26) is displayed a selection symbol (34) by means of which the selected configuration option (28) is optically marked.

4. Method according to any of the preceding claims
**characterised in that**
the representation of the virtual object (22) is altered only when the selection of the configuration option (28) has been confirmed by the second person (18) at the control device (14).

5. Method according to any of the preceding claims
**characterised in that**
for the expanded configuration options (28) respective information windows are displayed, in particular when the second person (18) inputs a corresponding control command at the control device (14).

6. Method according to any of the preceding claims
**characterised in that**
the configuration menu (26) is expanded such that a virtual distance, within the virtual environment (24), between the configuration menu (26) and a virtual observation position of the first person (16) is selected to be all the smaller, the smaller the distance is between the virtual observation position and the function group for which the configuration menu (26) is expanded.

7. Method according to claim 6,
**characterised in that**
the virtual distance is however limited to a predetermined amount.

8. Method according to any of the preceding claims,
**characterised in that**
that the part of the virtual environment (24) and/or of the virtual object (22) is hidden which is covered by the expanded configuration menu (26).

9. Virtual reality system (10), comprising a virtual reality pair of spectacles (12) and a control device (14) which is configured to control the virtual reality pair of spectacles (12) for carrying out the method according to any of the preceding claims.

## Revendications

1. Procédé de fonctionnement d'un système de réalité virtuelle (10), comportant les étapes consistant à :
- afficher un objet virtuel (22) placé dans un environnement virtuel (24) au moyen de lunettes de réalité virtuelle (12) portées par une première personne (16) ;
- superposer un menu de configuration (26) comprenant une pluralité d'options d'équipement (28) pour un groupe de fonctions prédéterminé de l'objet virtuel affiché (22) au moyen des lunettes de réalité virtuelle (12) dès qu'une deuxième personne (18) active un mode de configuration sur un dispositif de commande (14) ;
- sélectionner une des options d'équipement qui est superposée (28) conformément à une action de sélection effectuée par la deuxième personne au niveau du dispositif de commande (14) et modifier la présentation de l'objet virtuel (22) conformément à la sélection effectuée,
dans lequel le procédé est **caractérisé par**
- la mise en valeur optique du groupe de fonctions ou au moins d'un composant (30) de l'objet virtuel (22) faisant partie du groupe de fonctions dès que le menu de configuration (26) pour un groupe de fonctions est superposé.

2. Procédé selon la revendication 1
**caractérisé en ce que**
le groupe de fonctions pour lequel le menu de configuration (26) est superposé, est prédéterminé conformément à une entrée actionnée par la deuxième personne (18) au niveau du dispositif de commande (14).

3. Procédé selon l'une quelconque des revendications précédentes,
**caractérisé en ce que**
au sein du menu de configuration qui est superposé (26), un symbole de sélection (34) est affiché, au moyen duquel l'option d'équipement (28) sélectionnée est marquée optiquement.

4. Procédé selon l'une quelconque des revendications précédentes,
**caractérisé en ce que**
la représentation de l'objet virtuel (22) n'est modifiée que lorsque la sélection de l'option d'équipement (28) de la deuxième personne (18) a été confirmée au niveau du dispositif de commande (14).

5. Procédé selon l'une quelconque des revendications précédentes,
**caractérisé en ce que**
pour les options d'équipement qui sont superposées (28), des fenêtres d'information respectives sont affichées, en particulier lorsque la deuxième personne (18) entre un ordre de commande correspondant au niveau du dispositif de commande (14).

6. Procédé selon l'une quelconque des revendications précédentes,
**caractérisé en ce que**
le menu de configuration (26) est superposé de telle sorte qu'un écart virtuel au sein de l'environnement virtuel (24) entre le menu de configuration (26) et une position d'observation virtuelle de la première personne (16) est sélectionné de façon à être d'autant plus petit que l'écart entre la position d'observation virtuelle et le groupe de fonctions pour lequel le menu de configuration (26) superposé, est réduit.

7. Procédé selon la revendication 6,
**caractérisé en ce que**
l'écart virtuel est cependant limité à une mesure prédéterminée.

8. Procédé selon l'une quelconque des revendications précédentes,
**caractérisé en ce que**
la partie de l'environnement virtuel (24) et/ou de l'objet virtuel (22) qui est masquée est celle qui est recouverte par le menu de configuration qui est superposé (26).

9. Système de réalité virtuelle (10), comprenant des lunettes de réalité virtuelle (12) et un dispositif de commande (14) qui est conçu pour commander les lunettes de réalité virtuelle (12) pour réaliser un procédé selon l'une quelconque des revendications précédentes.
